# FASCICULE DE BREVET EUROPEEN

(11) **EP 0 345 705 B1**
(45) Date de publication et mention de la délivrance du brevet: **03.03.1993**
(21) Numéro de dépôt: 89110156.0
(22) Date de dépôt: 05.06.1989
(51) Int. Cl.: F23C 11/02, F16L 41/00

(54) **Dispositif d'étanchéité et d'absorption des dilatations différentielles entre une chambre de refroidissement de particules en suspension et un conduit de recyclage**
Vorrichtung zur Abdichtung und zur Aufnahme von Ausdehnungsunterschieden zwischen einem Kühlraum für Teilchen in der Schwebe und einer Rückführleitung
Device for sealing and absorbing differential expansions between a cooling chamber for suspended particles and a recycling duct

(30) Priorité: 08.06.1988 FR 8807620
(43) Date de publication de la demande: 13.12.1989
(73) Titulaire: STEIN INDUSTRIE Société anonyme dite:, F-78141 Velizy-Villacoublay (FR)
(72) Inventeur: Patron, Henri, F-78730 Rochefort en Yvelines (FR)
(74) Mandataire: Weinmiller, Jürgen

(56) Documents cités:
- EP-A- 0 171 097
- EP-A- 0 192 906
- GB-A- 2 087 750
- US-A- 1 626 772

## Description

La présente invention concerne un ensemble comportant une chambre de refroidissement de particules en suspension dans un courant de gaz de combustion et un conduit de recyclage de ces particules vers une chambre de combustion, avec un dispositif d'étanchéite, et d'absorption des dilatations différentielles entre ladite chambre et ledit conduit.

Il s'applique notamment à la jonction entre une chambre de refroidissement de particules par échange indirect de chaleur avec un gaz de combustion et un conduit de recyclage de ces particules dans un foyer de chaudière de combustion de particules en lit fluidisé circulant d'un combustible solide, en particulier de charbon, ou éventuellement liquide, par exemple à une installation de mise en oeuvre du procédé selon le document FR-B-2323101.

Le dispositif connu est constitué par un soufflet métallique reliant, soit l'orifice de sortie de la chambre de refroidissement et l'extrémité du conduit de recyclage, soit deux portions de ce conduit. Toutefois, la zone intérieure de ce soufflet se remplit assez rapidement de particules, de sorte qu'au bout d'assez peu de temps il n'est plus à même d'absorber les dilatations et qu'il y apparait des fuites.

La présente invention a pour but de procurer un ensemble de ce genre à dispositif d'étanchéité et d'absorption des dilatations différentielles qui fonctionne sur de très longues périodes de temps sans détérioration, qui absorbe aussi bien les dilatations différentielles selon les trois directions de l'espace.

L'ensemble selon l'invention est caractérisé en ce qu'il comporte :
a) une pièce tubulaire flottante de liaison entre la paroi de la chambre de refroidissement et le conduit de recyclage, reposant par l'extrémité externe de son pourtour sur la paroi de l'ouverture de la chambre de refroidissement, et par la section droite de son autre extrémité contre la section droite du conduit de liaison,
b/ une pluralité de flasques de guidage de la pièce tubulaire, fixés à la paroi externe de la chambre de refroidissement, répartis sur le pourtour de la pièce tubulaire flottante et reposant sur cette dernière par l'intermédiaire de rouleaux, et enserrant contre la ligne d'appui de la pièce tubulaire flottante sur la paroi de l'ouverture de la chambre de refroidissement un joint torique,
c/ un joint plat interposé entre les sections droite en regard de la pièce tubulaire flottante et du conduit de recyclage, et
d/ des brides de serrage contrôlé l'une contre l'autre des sections droites en regard de la pièce tubulaire flottante et du conduit, munies de trous oblongs de passage de boulons de serrage permettant des dilatations différentielles selon deux directions perpendiculaires, l'une de ces brides étant munie d'une pièce en forme de rotule présentant d'un côté une surface plane en vis-à-vis de cette bride, et de l'autre côté une surface en appui sur un patin de réglage du serrage, commandé par une vis traversant l'autre bride.

Dans des modes d'exécutions préférentiels il répond en outre aux caractéristiques suivantes :
- Il comporte une chambre de pressurisation entourant la pièce tubulaire flottante et l'extrémité du conduit proche de cette pièce.
- Les flasques de guidage sont de forme sensiblement trapézoïdale, et comportent des rouleaux proches de la ligne d'appui de la pièce tubulaire flottante sur la paroi de l'ouverture de la chambre de refroidissement, et d'autres rouleaux proches des brides de serrage contrôlé.
- La surface plane de la pièce en forme de rotule est munie d'un revêtement dur, résistant au frottement.
- La surface de la pièce en forme de rotule en appui sur le patin et la surface correspondante de celui-ci sont sphériques.

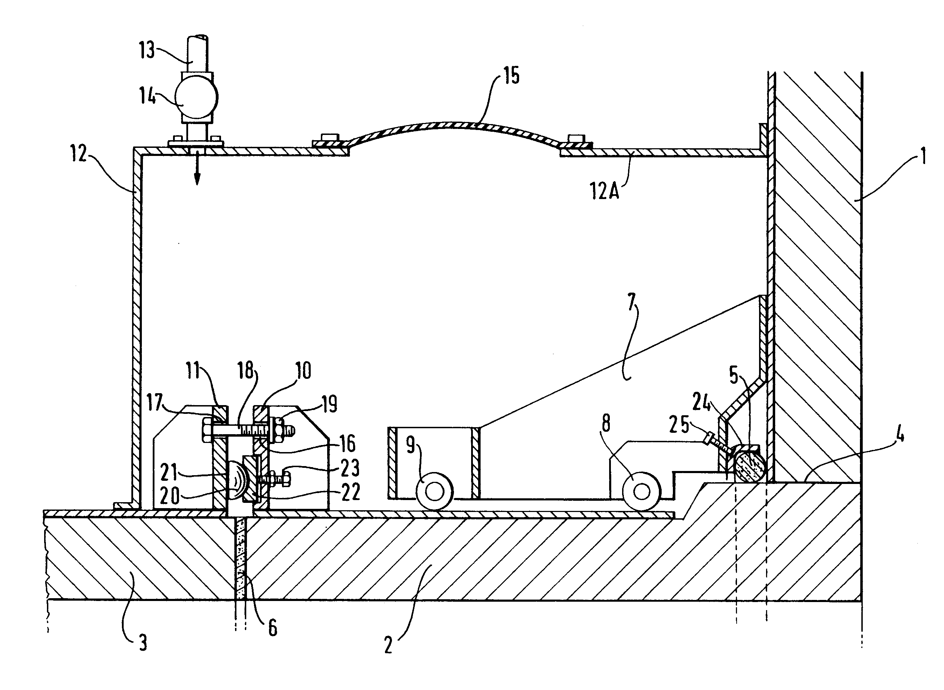

Il est décrit ci-après, à titre d'exemple et en référence à la figure schématique du dessin annexé, un ensemble à dispositif d'étanchéité et d'absorption des dilatation différentielles selon l'invention, en coupe par un plan diamétral, une seule des parois du conduit de recyclage et de la pièce tubulaire flottante de liaison étant représentée.

Dans la figure, le conduit 3 de recyclage des particules est relié à la paroi 1 de la chambre de refroidissement des particules par une pièce tubulaire flottante 2, dont l'extrémité repose dans l'ouverture de la paroi 1 le long d'une ouverture 4.

Un joint torique 5, résistant à haute température, maintenu par une cornière 24 réglable en position afin d'assurer l'étanchéité aux gaz par la vis de serrage 25, en face de la surface de contact entre le pourtour de l'ouverture de la chambre de refroidissement et la pièce tubulaire flottante, permet les dilatations différentielles longitudinales parallèles à l'axe du conduit de recyclage.

La pièce tubulaire flottante 2 est guidée par des flasques de forme générale trapézoïdale tels que 7, solidaires de la paroi 1 de la chambre de refroidissement et qui s'appuient sur la pièce flottante par l'intermédiaire de rouleaux 8, proche de la chambre de refroidissement, et 9, proche du conduit de recyclage.

Un joint plat 6, résistant à haute température, est disposé entre les surface d'extrémité de la pièce tubulaire flottante 2 et du conduit de recyclage 3. Ce joint est serré entre les deux surfaces grâce à des brides 10, 11 solidaires, l'une de la pièce flottante, l'autre du conduit. Il permet les dilatations différentielles selon les deux directions perpendiculaires à l'axe du conduit de recyclage. Le réglage précis de l'écartement des deux brides est assuré par des pièces en forme de rotule 20, présentant d'un côté une face plane 21 en appui sur la bride 11, et de l'autre une surface sphérique venant en appui sur la surface creuse sphérique d'un patin 22, dont la position peut être réglée par une vis 23. Le maintien des deux brides en position sensiblement fixe l'une par rapport à l'autre est assuré par un boulon 18 traversant des trous en regard 16, 17 des deux brides, et un écrou de serrage 19. Ces trous sont oblongs, de façon à permettre les dilatations différentielles selon deux directions perpendiculaires.

Pour éviter les fuites éventuelles de particules hors du conduit de recyclage, les joints sont entourés d'une enceinte en surpression, à parois 12A, 12 soudées d'une part sur la paroi de la chambre de refroidissement des particules, d'autre part sur le pourtour du conduit de recyclage, reliées entre elles par un joint souple 15, et qui peut être alimentée en air par le conduit 13 et la vanne 14.

## Revendications

1. Ensemble comportant une chambre de refroidissement de particules en suspension dans un courant de gaz de combustion et un conduit (3) de recyclage de ces particules vers une chambre de combustion, avec un dispositif d'étanchéité et d'absorption des dilatations différentielles entre ladite chambre et ledit conduit, caractérisé en ce qu'il comprend :
a/ une pièce tubulaire flottante (2) de liaison entre la paroi (1) de la chambre de refroidissement et le conduit de recyclage, reposant par l'extrémité externe de son pourtour sur la paroi de l'ouverture de la chambre de refroidissement, et par la section droite de son autre extrémité contre la section droite du conduit de liaison,
b/ une pluralité de flasques (7) de guidage de la pièce tubulaire, fixés à la paroi externe (1) de la chambre de refroidissement, répartis sur le pourtour de la pièce tubulaire flottante et reposant sur cette dernière par l'intermédiaire de rouleaux (8, 9), et enserrant contre la ligne d'appui (4) de la pièce tubulaire flottante sur la paroi de l'ouverture de la chambre de refroidissement un joint torique (5),
c/ un joint plat (6) interposé entre les sections droite en regard de la pièce tubulaire flottante (2) et du conduit de recyclage (3), et
d/ des brides (10, 11) de serrage contrôlé l'une contre l'autre des sections droites en regard de la pièce tubulaire flottante et du conduit, munies de trous oblongs (16, 17) de passage de boulons de serrage (18) permettant des dilatations différentielles selon deux directions perpendiculaires, l'une de ces brides étant munies d'une pièce en forme de rotule (20) présentant d'un côté une surface plane (21) en vis-à-vis de cette bride, et de l'autre côté une surface en appui sur un patin (22) de réglage du serrage, commandé par une vis (23) traversant l'autre bride.

2. Ensemble selon la revendication 1, caractérisé en ce qu'il comporte en outre une chambre de pressurisation (12) entourant la pièce tubulaire flottante (2) et l'extrémité du conduit (3) proche de cette pièce.

3. Ensemble selon les revendications 1 ou 2, caractérisé en ce que les flasques de guidage sont de forme sensiblement trapézoïdale, et comportent des rouleaux (8) proches de la ligne d'appui de la pièce tubulaire flottante sur la paroi de l'ouverture de la chambre de refroidissement, et d'autres rouleaux (9) proches des brides de serrage contrôlé.

4. Ensemble selon l'une des revendications 1 à 3, caractérisé en ce que la surface plane (21) de la pièce en forme de rotule est munie d'un revêtement dur, résistant au frottement.

5. Ensemble selon l'une des revendications 1 à 4, caractérisé en que la surface de la pièce en forme de rotule (20) en appui sur le patin et la surface correspondante de celui-ci sont sphériques.

## Claims

1. An arrangement comprising a cooling chamber for cooling particles in suspension in a flow of fuel gas and a duct (3) for recycling said particles to a combustion chamber, and comprising a device for sealing and absorbing differential expansion between said chamber and said duct, characterized in that it comprises:
a) a tubular expansion joint part (2) interconnecting the wall (1) of the cooling chamber and the recycling duct, the outside margin of one of the ends of the part being supported by the wall of the opening into the cooling chamber and the cross-section of the other end of the part being applied against the cross-section of the recycling duct;
b) a plurality of guide plates (7) for guiding the tubular part, said plates being fixed to the outside wall (1) of the cooling chamber and being distributed around the tubular expansion joint part and resting thereagainst by means of rolls (8, 9), and clamping a sealing ring (5) against the join line (4) between the tubular expansion joint part and the wall of the opening in the cooling chamber;
c) a flat gasket (6) disposed between the facing end of the tubular expansion joint part (2) and of the recycling duct (3); and
d) flanges (10, 11) for controlled mutual clamping of the facing ends of the tubular expansion joint part and of the duct, said flanges being provided with oblong holes (16, 17) for passing clamping bolts (18) for allowing differential expansion to take place in two perpendicular directions, one of said flanges being provided with as pebble-shaped part (20) having a plane surface (21) on one side facing said flange, and a surface on its other side bearing against a clamping adjustment shoe (22) controlled by a screw (23) passing through the other flange.

2. An arrangement according to claim 1, characterized in that it also includes a pressurization chamber (12) surrounding the tubular expansion joint part (2) and the end of the duct (3) adjacent thereto.

3. An arrangement according to claim 1 or 2, characterized in that the guide plates are substantially trapezoidal in shape, and include rolls (8) close to the join line between the tubular expansion joint part and the wall of the opening in the cooling chamber, and other rolls (9) close to said flanges.

4. An arrangement according to any one of claims 1 to 3, characterized in that the plane surface (21) of the pebble-shaped part is provided with a hard coating which withstands rubbing.

5. An arrangement according to any one of claims 1 to 4, characterized in that the surface of the pebble-shaped part (20) bearing against the shoe and the corresponding surface of the shoe are spherical.

## Patentansprüche

1. Einheit mit einer Kammer zum Abkühlen von Schwebeteilchen in einem Verbrennungsgasstrom und einer Rückspeisungsleitung (3) für diese Teilchen zu einer Brennkammer, wobei eine Vorrichtung zur Abdichtung und zur Absorption von Ausdehnungsunterschieden zwischen die Kammer und die Leitung eingefügt ist, dadurch gekennzeichnet, daß sie aufweist:
a) ein frei bewegliches rohrförmiges Bauteil (2) zur Verbindung zwischen der Wand (1) der Kühlkammer und der Rückspeisungsleitung, wobei dieses Bauteil mit dem äußeren Ende seines Umfangs auf der Wand der Öffnung in der Kühlkammer und mit der Schnittfläche seines anderen Endes an der Schnittfläche der Verbindungsleitung anliegt,
b) eine Mehrzahl von Stützeisen (7) zur Führung des rohrförmigen Bauteils, die an der Außenwand (1) der Kühlkammer über den Umfang des frei beweglichen rohrförmigen Bauteils verteilt befestigt sind und sich auf diesem über Rollen (8, 9) abstützen, wobei gegen die Kontaktlinie (4) des frei beweglichen rohrförmigen Bauteils auf der Wand der Öffnung in der Kühlkammer eine Ringdichtung (5) drückt,
c) eine Flachdichtung, die zwischen die einander gegenüberliegenden Schnittflächen des frei beweglichen rohrförmigen Bauteils (2) und der Rückspeisungsleitung (3) eingefügt ist,
d) und Flansche (10, 11) zur kontrollierten Verspannung der einander gegenüberliegenden Schnittflächen des frei beweglichen rohrförmigen Bauteils und der Leitung, wobei diese Flansche Langlöcher (16, 17) für Spannbolzen (18) besitzen, die unterschiedliche Ausdehnungen in zwei zueinander senkrechten Richtungen zulassen, und wobei einer der Flansche mit einem kugelförmigen Bauteil (20) versehen ist, das auf einer Seite eine ebene Oberfläche (21) gegenüber diesem Flansch und auf der anderen Seite eine Oberfläche besitzt, die sich auf einem Gleitstück (22) zur Einstellung der Spannkraft abstützt, wobei dieses Gleitstück durch eine den anderen Flansch durchquerende Schraube (23) eingestellt werden kann.

2. Einheit nach Anspruch 1, dadurch gekennzeichnet, daß sie außerdem einen Überdruckbereich (12) aufweist, der das frei bewegliche rohrförmige Bauteil (2) sowie das Ende der Leitung (3) in der Nähe dieses Bauteils umgibt.

3. Einheit nach Anspruch 1 oder 2, dadurch gekennzeichnet, daß die Stützeisen im wesentliche trapezförmig sind und Rollen (8) in der Nähe der Kontaktlinie zwischen dem frei beweglichen rohrförmigen Bauteil und der Wand der Öffnung in der Kühlkammer sowie andere Rollen (9) in der Nähe der Flansche zum kontrollierten Festspannen aufweisen.

4. Einheit nach einem der Ansprüche 1 bis 3, dadurch gekennzeichnet, daß die ebene Fläche (21) des kugelförmigen Bauteils mit einer harten und abriebfesten Beschichtung versehen ist.

5. Einheit nach einem der Ansprüche 1 bis 4, dadurch gekennzeichnet, daß die Oberfläche des sich auf dem Gleitstück abstützenden kugelförmigen Bauteils (20) und die entsprechende Oberfläche des Gleitstücks kugelig sind.
